# EUROPEAN PATENT APPLICATION

(11) **EP 0 685 821 A2**
(43) Date of publication of application: **06.12.1995**
(21) Application number: 95303721.5
(22) Date of filing: 31.05.1995
(51) Int. Cl.: G06K 19/07

(54) **System for recognising vehicle tyres**

(30) Priority: 01.06.1994 DE 4419296
(71) Applicant: SP REIFENWERKE GMBH, 63450 Hanau (DE)
(72) Inventor: Reitz, Rolf, D-63526 Erlensee (DE); Grunwald, Reinhard, D-63526 Erlensee (DE)
(74) Representative: Stewart, Charles Geoffrey

(57) **Abstract**

A system for recognising pneumatic vehicle tyres, wherein the system can be employed in particular during the tyre manufacturing process, the system comprising a transceiver device accommodated in the tyre material which, in response to an externally applied interrogation signal, delivers a response signal which can be detected from outside the tyre and from which information about the tyre can be deduced. An individual recognition of vehicle tyres is possible with the system during the manufacturing process as well as for the completed tyre.

## Description

The invention relates to a system for recognising pneumatic vehicle tyres, wherein the system can be employed in particular during the tyre manufacturing process.

A tyre recognition system of this kind should allow a tyre to be followed during its manufacture and re-identified at any relevant point in the assembly, in order to allow the assembly to be controlled correspondingly. There is an increasing need and necessity to individually control tyre assembly - for example in dependence on the size and profile of the tyres. This would facilitate the cost-effective and easy manufacture of individual test tyres or of special series made in small batches, since it would allow the cover building and tyre treatment steps to be matched to the particular type of tyre. It would also be possible during the manufacturing process to screen out individual tyres which were identified as deficient.

Up to now, tyres have been differentiated primarily in terms of their weight and size so that an exact identification of individual tyres or tyre types is not possible. Consequently, the tyres can only be divided up very roughly into classes. This leads, among other things, to increased cost. Mistakes in the size identification can occur and can then lead to incorrect tyre treatment, whereby, in some cases, the tyre is degraded or the tyre subsequently needs to be supplied to the correct treatment.

The object of the invention is thus to provide a system for recognising vehicle tyres in which the named problems do not occur and which in particular allows a more precise identification of the tyres.

This object is satisfied by a system having the features of the main claim. A transceiver device arrangement in the tyre structure or material provides an individual tyre distinguishing tag which can be read externally and interrogated at any time during the manufacturing process. The relevant tyre can thus be routed through production in a precise manner and subjected to the desired treatment at each point of the production. In order to perform this, the transceiver device is preferably anchored in the tyre right at the beginning of the tyre manufacture on the cover building machine.

With the system of the invention, it is therefore possible to determine the tyre specification data of any tyre at any desired point in time at any point in the assembly, such as at the cover building machine, at green-tyre spraying, curing, at the test plant or at palletting. It is for example therefore possible to match the process parameters to the tyre just identified. Particular treatment steps can be omitted for particular tyres. For example trimming can be omitted in order to save cost. Alternatively, tyres which have been identified as deficient can be filtered out to remove them from further manufacturing processes.

Moreover, the arrangement of the transceiver device in the tyre material has the advantage that the tyre distinguishing tag is still present after completion of the manufacturing process and can remain in the tyre. The tyres can therefore always be identified even at later times and, in particular, can be assigned a specific serial number. The tyre distinguishing tag can also be used for stock control, in particular by purchasers of tyres. It is therefore for example also possible to access exact data relating to the number of green tyres, the stock of cured tyres and the stock of completed tyres at any time during tyre assembly.

In accordance with an embodiment of the invention, the tyre recognition system co-operates with a databank system which manages the tyre information. The databank system preferably has a data memory in which the tyre data are stored under a number code. This has the advantage that the relevant tyres only need to be tagged with this number code. This can preferably be performed in accordance with the invention with a passive chip, a so-called transponder, which can be given a suitable numbering, for example a progressive numbering.

Transponders of this kind are available for modest cost and, furthermore, can be externally read with means of modest cost. Additionally, the transponders have the advantage that they are small and can therefore be accommodated in the tyre material without difficulty. The number of numbers available for the numbering is selected to be sufficiently large to allow individual distinguishing tags to be assigned to tyres for a virtually unlimited period. With the aid of data management, the pallet composition can also be controlled so that for example mixed pallets can be made up in a cost-effective manner.

The transponders can be rubberised in accordance with the invention which leads to good embedding in the tyre material. The transponders can, however, also be encapsulated in artificial resin or in a similar material, whereby an additional high mechanical stability is achieved. Transponders of this kind are resistant even to high mechanical loads, such as those which occur in particular in high-performance tyres.

Heat and pressure resistant transponders are preferably used in order to avoid them being damaged during the manufacturing process.

The anchoring of the transponder in the tyre can be performed in accordance with the invention, above the wire bead in the seam of the bead filler, wherein this anchoring is performed at the cover building machine. At this point, the transponder is well protected against external influences and, at the same time, can be read out from the outside by means of suitable equipment without difficulty.

Reading out the tyre distinguishing tag is performed with the aid of a transceiver arrangement of any suitable kind, in particular hand-held devices can be used for this. During the manufacturing process, however, reading out takes place as a rule by means of a stationary device. In any case, reading out can be performed in a simple and cost-effective manner.

The transponders can, for example, have a diameter of approximately 9mm and a thickness of 2mm. Their integration in the tyre thus has no significant effect on the tyre properties due to their slight dimensions and negligible weight.

## Claims

1. A system for recognising pneumatic vehicle tyres, wherein the system can be employed in particular during the tyre manufacturing process, characterised by the system comprising a transceiver device accommodated in the tyre material which, in response to an externally applied interrogation signal, delivers a response signal which can be detected from outside the tyre and from which information about the tyre can be deduced.

2. A system in accordance with claim 1, characterised in that the transceiver device is already installed in the tyre at the cover building machine.

3. A system in accordance with claim 1 or 2, characterised in that the system co-operates with a database system.

4. A system in accordance with claim 3, characterised in that passive chips, so-called transponders, are accommodated in the tyre material with, for example, progressive numbering, and in that the tyre data associated with the relevant tyre is retrievably stored under a transponder number associated therewith.

5. A system in accordance with claim 4, characterised in that the transponders are rubberised.

6. A system in accordance with claim 4, characterised in that the transponders are encapsulated in artificial resin or similar material.

7. A system in accordance with any one of the claims 4 to 6, characterised in that the transponders are heat and pressure resistant.

8. A system in accordance with any one of the preceding claims, characterised in that the transceiver device is anchored in the seam of the bead filler of the pneumatic vehicle tyre above the wire bead or at any other position in the bead filler above the wire bead.

9. A pneumatic vehicle tyre having a transceiver device in accordance with any one of the claims 1 to 8.
